# EUROPÄISCHE PATENTSCHRIFT

(11) **EP 4 076 110 B1**
(45) Veröffentlichungstag und Bekanntmachung des Hinweises auf die Patenterteilung: **06.09.2023**
(21) Anmeldenummer: 20829811.7
(22) Anmeldetag: 10.12.2020
(51) Int. Cl.: A47J 31/46

(54) **GETRÄNKEZUBEREITUNGSVORRICHTUNG MIT AUSLASSEINRICHTUNG**
BEVERAGE MAKER HAVING AN OUTLET DEVICE
MACHINE DE PRÉPARATION DE BOISSONS AVEC DISPOSITIF DE SORTIE

(30) Priorität: 18.12.2019 DE 102019134919
(43) Veröffentlichungstag der Anmeldung: 26.10.2022
(73) Patentinhaber: FRANKE Kaffeemaschinen AG, 4663 Aarburg (CH)
(72) Erfinder: VETTERLI, Heinz, 8855 Wangen (CH)
(74) Vertreter: LBP Lemcke, Brommer & Partner Patentanwälte mbB
(86) Internationale Anmeldenummer: PCT/EP2020/085637
(87) Internationale Veröffentlichungsnummer: WO 2021/122335

(56) Entgegenhaltungen:
- EP-A1- 0 820 715
- EP-A1- 2 583 596
- EP-A1- 2 732 741
- US-A1- 2018 344 074

## Beschreibung

Die vorliegende Erfindung betrifft eine Getränkezubereitungsvorrichtung nach dem Oberbegriff des Anspruchs 1.

Im Stand der Technik sind Kaffeevollautomaten bekannt, die zur portionsweisen Zubereitung und Ausgabe von kaffeebasierten Getränken dienen. Die Getränkeauswahl erfolgt hierbei über eine Benutzerschnittstelle. Nach Auswahl einer Getränkevariante wird mittels einer integrierten Brühvorrichtung entsprechend den Benutzervorgaben ein Kaffeegetränk zubereitet und an einem Getränkeauslass ausgegeben. Häufig sind neben dem genannten Heißgetränkeauslass Auslässe für weitere Getränkekomponenten wie etwa Milch, Milchschaum oder Aromazusätze vorgesehen. Die Auslässe können hierbei zu einem fest an dem Kaffeevollautomaten angeordneten Auslasskopf gruppiert sein.

Daneben sind im Stand der Technik sogenannte Siebträgermaschinen bekannt, bei denen statt eines Auslasskopfes ein Siebträger mit einem daran angebrachten Auslass dichtend befestigt wird. Der Siebträger wird von Hand mit Kaffeepulver befüllt, an der Siebträgermaschine befestigt und über diese unter Druck mit Heißwasser beaufschlagt, bis eine vorgegebene Menge Heißwasser durch das im Siebträger enthaltene Kaffeesieb und den im Kaffeesieb enthaltenen Kaffeekuchen gelaufen ist. Weitere Getränkezusätze werden dem Kaffeegetränk vom Barista manuell zugefügt.

Schließlich sind auch hybride Systeme bekannt, bei denen ebenfalls ein Siebträger zum Einsatz kommt, dieser jedoch über eine integrierte Kaffeemühle automatisch mit gemahlenem Kaffeepulver befüllt wird. Eine solche hybride Kaffeemaschine ist beispielsweise in der WO 2010 085850 A1 beschrieben.

Die EP 0 820 715 A1 beschreibt eine Kaffeemaschine mit einem Kaffeeauslauf und einem Milchauslauf, die konstruktiv zu einer Auslasseinheit zusammengefasst sind. Die Auslasseinheit ist über übliche Dichtungen abgedichtet lösbar mit den Anschlussleitungen verbunden sein. Zum Auswerfen der Auslasseinheit kann ein Hebel vorgesehen sein.

Die EP 2 732 741 A1 beschreibt einen Getränkebereiter mit einem Auslasskopf, der über eine Flanschverbindung mit drei Auslassleitungen mit dem Getränkebereiter gekoppelt und dort verrastet ist.

In der US2018/0344074 A1 ist eine ist Kaffeemaschine beschrieben, auf deren Kaffeeauslauf mit einem kompakten Kühlaggregat integriert ist, welches von einem Kompressor mit Kühlmittel gespeist wird und über welches der frisch gebrühte Kaffee abgekühlt und als gekühlter Kaffee ausgegeben werden kann.

Die Erfindung hat sich zur Aufgabe gestellt, eine Getränkezubereitungsvorrichtung anzugeben, welche die Vorteile eines Kaffeevollautomaten und bezüglich des Auslasskopfes die Vorteile einer Siebträgermaschine in Hinblick auf Austauschbarkeit und einfacher Reinigung vereint.

Die Aufgabe wird gelöst durch die Merkmale des Anspruchs 1. Vorteilhafte Ausgestaltungen sind den abhängigen Ansprüchen zu entnehmen.

Bei einer Getränkezubereitungsvorrichtung der eingangs genannten Art ist vorgesehen, dass die Getränkezubereitungsvorrichtung mindestens einen an der Auslasseinrichtung festlegbaren Auslasskopf zur Ausgabe einer oder mehrerer über separate Lebensmittelleitungen zu der Auslasseinrichtung geführter Getränkekomponenten umfasst und die Auslasseinrichtung eine mechanische Schnittstelle zur dichtenden Ankopplung des Auslasskopfes aufweist.

Der Auslasskopf umfasst hierbei den Auslass für frisch gebrühtes Heißgetränk wie etwa Kaffee sowie gegebenenfalls weitere Auslässe für andere Getränkekomponenten wie etwa Milch, Milchschaum oder Aromazusätze. Die mechanische Schnittstelle zur Ankopplung des Auslasskopfes ermöglicht ein einfaches Abnehmen zu Reinigungszwecken oder zum Austausch des Auslasskopfes. Dieser kann insbesondere mit einer äußeren Form ähnlich eines Siebträgers ausgebildet sein, dessen Oberseite jedoch von einer mit Anschlussöffnungen versehenen, ansonsten geschlossenen Dichtfläche gebildet wird. Die Gestaltung des Auslasskopfes in Form eines Siebträgers ermöglicht eine einfache und intuitive Bedienung und vermittelt den Eindruck und Charme einer professionellen Baristamaschine.

Erfindungsgemäß ist außerdem vorgesehen, dass die mechanische Schnittstelle eine Mehrzahl von Anschlussöffnungen für unterschiedliche Getränkekomponenten aufweist, die mit den Lebensmittelleitungen kommunizieren und gegen welche der Auslasskopf dichtend angekoppelt wird. Der Auslasskopf weist hierbei eine Dichtfläche mit korrespondierenden Öffnungen für eine Teilmenge der Anschlussöffnungen auf, wobei die Dichtfläche in angekoppeltem Zustand des Auslasskopfes die übrigen, also die nicht von dem Auslasskopf übernommenen Anschlussöffnungen fluiddicht verschließt. Es kann hierbei insbesondere vorgesehen sein, dass an einem Anschlusskopf nicht alle von der Auslasseinrichtung bereitgestellten Getränkekomponenten ausgegeben werden können. Somit erfolgt über die Auswahl eines mit der Auslasseinrichtung gekoppelten Anschlusskopfes eine Vorauswahl ausgebbarer Getränkevarianten. Beispielsweise können separate Auslassköpfe zur Ausgabe von Espresso in eine Tasse (Einzelauslauf), zur Ausgabe von Espresso in zwei Tassen gleichzeitig (Doppelauslauf) oder zur Ausgabe von Cappuccino und Latte Macchiato vorgesehen sein.

Bei einer bevorzugten Ausführungsform weist die mechanische Schnittstelle eine Linearführung zum Einschub des Auslasskopfes auf. Der Auslasskopf kann somit in einfacher Weise beispielsweise von vorne in die Führung eingeschoben und zum Austausch oder Reinigen herausgezogen werden.

Alternativ oder kumulativ weist die mechanische Schnittstelle einen Bedienhebel auf, welcher ausgebildet ist, den Auslasskopf über eine Anpressmechanik gegen eine mit Anschlussstellen versehene Dichtfläche der Auslasseinrichtung anzupressen. Über den Bedienhebel kann somit der Auslasskopf dichtend gegen die Auslasseinrichtung angekoppelt bzw. von dieser entkoppelt werden. Über die Anschlussstellen erfolgt eine fluidische Verbindung der am Auslasskopf angeordneten Auslässe mit den zur Auslasseinrichtung geführten Lebensmittelleitungen. Die Ankopplung durch Anpressen gegen eine Dichtfläche ermöglicht eine einfache und betriebssichere Kopplung zwischen Auslasskopf und Auslasseinrichtung. In Kombination mit einer zuvor genannten Linearführung ergibt sich eine besonders einfache Bedienung durch Einführen des Auslasskopfes in die Führung und anschließendes Ankoppeln und Verriegeln des Auslasskopfes gegenüber der Auslasseinrichtung mit Hilfe des Bedienhebels.

Alternativ zu einer Anpressmechanik kann auch ein Motor vorgesehen sein, der bei Betätigung eines Bedienelements, wie etwa eines Bedienhebels, den Auslasskopf gegen die Auslasseinrichtung bewegt, um diesen an die Dichtfläche Auslasseinrichtung anzupressen.

Bei einer weiteren Ausführungsform kann die die mechanische Schnittstelle statt einer Linearführung und einer Anpressmechanik auch eine anderweitige Befestigung aufweisen, insbesondere in Form einer Drehbefestigung wie etwa einem Bajonettverschluss.

Die einzelnen Anschlussöffnungen an der Auslasseinrichtung sind vorzugsweise jeweils mit einer Dichtung versehen. Diese dichtet gegenüber der angekoppelten Dichtfläche des Anschlusskopfes bzw. verschließt die betreffende Anschlussöffnung, wenn diese vom Auslasskopf nicht übernommen wird.

Bei einer bevorzugten Ausführungsform besitzt die Auslasseinrichtung eine Heizung zur Aufwärmung der Auslasseinrichtung und des daran angekoppelten Auslasskopfes. Somit werden Heißgetränke über die vorgewärmte Auslasseinrichtung und den vorgewärmten Auslasskopf ausgegeben, sodass diese auf dem Weg in ein Trinkgefäß nicht abkühlen. Eine thermische Ankopplung des Auslasskopfes kann hierbei insbesondere über dessen Dichtfläche erfolgen, welche metallisch, beispielsweise aus Aluminiumguss, ausgeführt sein kann.

Da die vorliegende Erfindung ein einfaches Auswechseln der Anschlussköpfe ermöglicht, kann bei einer weiteren bevorzugten Ausführungsform vorgesehen sein, dass der Auslasskopf mit einem Identifizierungsmerkmal versehen ist, welches über den Auslasskopf ausgebbare Getränkearten identifiziert, und die Auslasseinrichtung einen Leser zum Auslesen des Identifizierungsmerkmals aufweist. Bei dem Identifizierungsmerkmal kann es sich insbesondere um ein berührungslos auslesbares Identifizierungsmerkmal wie etwa einem RFID-Tag, NFC-Chip oder dergleichen handeln. Ebenso liegt es im Rahmen der vorliegenden Erfindung, einen optisch oder magnetisch auslesbaren Code als Identifizierungsmerkmal an dem Auslasskopf vorzusehen. Darüber hinaus wäre auch eine mechanische Codierung, etwa durch Stifte oder Vorsprünge unterschiedlicher Längen und eine mechanische Abtastung der Stiftlängen an der Auslasseinrichtung möglich und ist im Rahmen der Erfindung mit umfasst.

Im Rahmen der vorliegenden Erfindung ist vorgesehen, dass der Auslasskopf ausgewechselt werden kann. Insbesondere ist es möglich, verschiedene Auslassköpfe für unterschiedliche Getränke oder Getränkegruppen vorzusehen, die wahlweise mit der Auslasseinrichtung gekoppelt werden. Über das Identifizierungsmerkmal der unterschiedlichen Auslassköpfe und den an der Auslasseinrichtung angeordneten Leser ist es möglich, an der Getränkezubereitungsvorrichtung automatisch den Typ des aktuell angekoppelten Auslasskopfes zu erkennen und nur solche Getränke oder Getränkevarianten zur Auswahl anzubieten und freizuschalten, die mit dem aktuell angekoppelten Auslasskopf ausgebbar sind.

Vorzugsweise weist die Getränkezubereitungsvorrichtung zu diesem Zweck eine Steuerung auf sowie eine mit dieser signaltechnisch verbundene Benutzerschnittstelle, insbesondere eine grafische Benutzerschnittstelle. Über die Benutzerschnittstelle sind unterschiedliche Getränke oder Getränkevarianten auswählbar. Die Steuerung ist hierbei ausgebildet, eine automatische Zubereitung und Ausgabe eines ausgewählten Getränks bzw. einer ausgewählten Getränkevariante durch die Getränkezubereitungsvorrichtung zu veranlassen und die Getränkezubereitungsvorrichtung entsprechend anzusteuern. Die Steuerung ist mit dem Leser zusammenwirkend, um über die grafische Benutzerschnittstelle in Abhängigkeit des vom Leser ausgelesenen Identifizierungsmerkmals nur solche Getränke oder Getränkevarianten zur Auswahl anzubieten, die mit dem angekoppelten Auslasskopf ausgebbar sind. Somit können unterschiedliche Auslassköpfe für unterschiedliche Getränke oder Getränkegruppen eingesetzt werden, wobei über eine automatische Erkennung des aktuell verwendeten Auslasskopfes eine Vorauswahl an möglichen Getränken gesteuert wird.

Weitere Vorteile und Eigenschaften der vorliegenden Erfindung ergeben sich aus der nachfolgenden Beschreibung von Ausführungsbeispielen anhand der Figuren. Es zeigt:
- Figur 1: eine Ansicht einer Getränkezubereitungsvorrichtung mit Auslasseinrichtung und daran angekoppeltem Auslasskopf,
- Figur 2: die Getränkezubereitungsvorrichtung gemäß Figur 1 mit entnommenem Auslasskopf,
- Figur 3a: eine Ansicht der Getränkezubereitungsvorrichtung mit entnommenem Auslasskopf von schräg unten,
- Figur 3b: eine Detailansicht der Auslasseinrichtung aus Figur3a,
- Figur 4: die Getränkezubereitungsvorrichtung mit drei alternativ einsetzbaren Auslassköpfen, und
- Figur 5: ein Wasserflussschema einer Getränkezubereitungsvorrichtung.

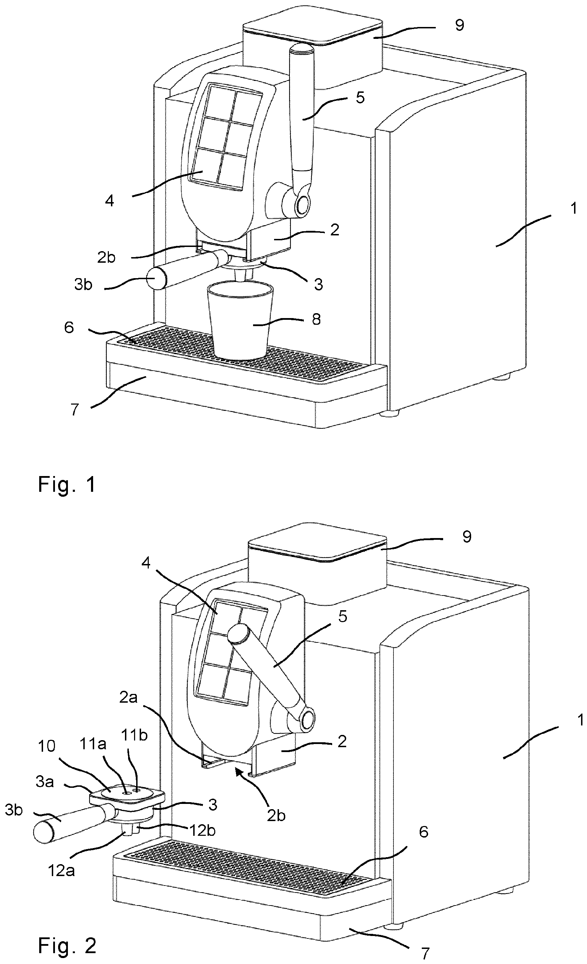

In Figur 1 ist eine Getränkezubereitungsvorrichtung in Form eines Kaffeevollautomaten gezeigt. Frontseitig an dem Kaffeevollautomaten befindet sich eine Auslasseinrichtung 2 mit einer Aufnahme für einen Auslasskopf 3. Oberhalb der Auslasseinrichtung 2 ist eine grafische Benutzerschnittstelle 4 in Form eines berührungssensitiven Displays angeordnet. Seitlich davon befindet sich ein Bedienhebel 5, der zur Verriegelung bzw. Entriegelung des in der Aufnahme der Auslassöffnung 2 aufgenommenen Auslasskopfes dient. Unterhalb der Auslasseinrichtung 2 ist eine Auffangschale 7 mit einem ein Tropfgitter 6 angeordnet. Auf dem Tropfgitter 6 ist unterhalb des Auslasskopfes 3 beispielhaft ein Trinkgefäß 8 positioniert, in welches ein von dem Kaffeevollautomaten 1 auszugebendes Heißgetränk eingefüllt wird.

Im oberen Bereich des Kaffeevollautomaten 1 ist ein Vorratsbehälter 9 für Kaffeebohnen gezeigt. Der Kaffeevollautomat besitzt eine integrierte Mühle, mit der Kaffeebohnen portionsweise gemahlen und zur Zubereitung eines Kaffeegetränks in eine integrierte Brühvorrichtung eingefüllt werden.

Die Funktion der gezeigten Getränkezubereitungsvorrichtung entspricht der herkömmlicher Kaffeevollautomaten. Bei Auswahl einer auf dem berührungssensitiven Display 4 in Form eines Piktogramms dargestellten Getränkevariante und gegebenenfalls Betätigung eines entsprechenden Startsymbols, erfolgt eine automatische Zubereitung und Ausgabe des ausgewählten Getränks. Hierbei sind über die grafische Benutzerschnittstelle 4 lediglich solche Getränkevarianten auswählbar, die mit dem eingesetzten Auslasskopf 3 ausgegeben werden können.

In Figur 2 ist der Kaffeevollautomat 1 mit entnommenen Auslasskopf 3 gezeigt. Hierzu ist der Bedienhebel 5 nach vorne verschwenkt, um den Auslasskopf 3 zu entriegeln, und der Auslasskopf 3 ist nach vorne aus der Führung 2a der Auslasseinrichtung 2 herausgezogen.

Der Auslasskopf 3 besitzt einen Träger 3a, der ähnlich einem herkömmlichen Siebträger geformt und mit einem Griff 3b versehen ist. An der Oberseite des Trägers 3a ist eine kreisrunde Dichtfläche 10 ausgebildet, in der sich im gezeigten Ausführungsbeispiel zwei Öffnungen 11a, 11b befinden, welche mit Auslässen 12a, 12b an der Unterseite des Auslasskopfes korrespondieren. Über diese Öffnungen 11a, 11b und zugehörigen Auslässe 12a, 12b können über die Auslasseinrichtung Getränkekomponenten ausgegeben werden.

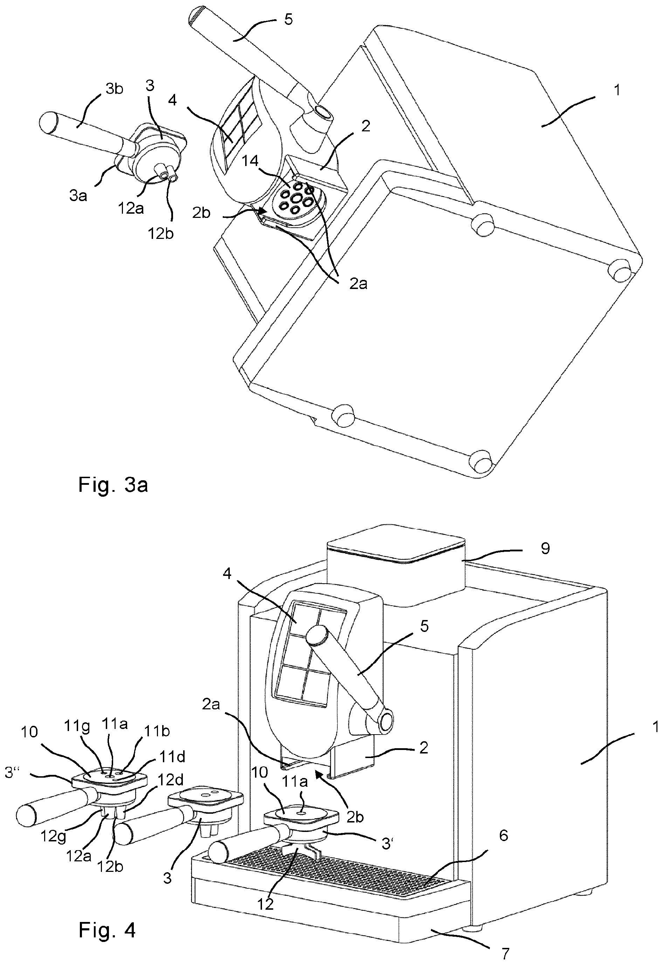

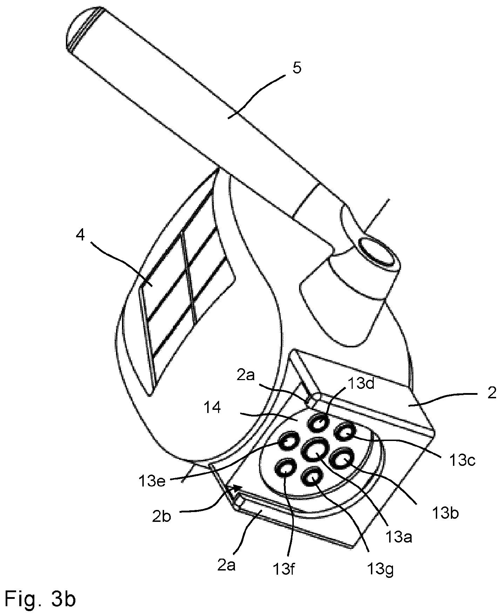

In Figur 3a ist der Kaffeevollautomat von schräg unten gezeigt. Hierbei sieht man von unten in die Aufnahme 2b der Auslasseinrichtung 2, in welche der Auslasskopf eingeführt werden kann. Die beiden seitlich nach innen ragenden Fortsätze an der Unterseite der Auslasseinrichtung 2 bilden die Linearführung 2a für den Auslasskopf 3. An der Oberseite der Aufnahme 2b befinden sich insgesamt sieben Auslassöffnungen 13a bis 13g für unterschiedliche, über die Auslasseinrichtung 2 ausgebbare Getränkekomponenten, die in der Detailansicht der Figur 3b vergrößert dargestellt sind. Um die Auslassöffnungen 13a bis 13g ist eine Dichtfläche 14 ausgebildet, die der Dichtfläche 10 des Auslasskopfes 3 entspricht. Außerdem befinden sich um die Auslassöffnungen 13a bis 13g jeweils Ringdichtungen, welche die Auslassöffnungen 13a bis 13g gegen die Dichtfläche 10 eines eingesetzten Auslasskopfes dichten. Die mittlere Auslassöffnung 13a dient zur Ausgabe von frisch gebrühtem Kaffee; die Auslauföffnung 13b für Milch und Milchschaum, die übrigen Auslauföffnungen 13c-13g für weitere Getränkezusätze.

Die Funktion des Bedienhebels 5 besteht darin, einen in die Aufnahme 2b eingeführten Auslasskopf 3 über eine entsprechende Anpressmechanik, etwa eine Hebelmechanik oder eine Zahnstange mit Ritzel, gegen die Dichtfläche 14 der Auslasseinrichtung 2 anzupressen und so den Auslasskopf 3 dichtend an die Auslasseinrichtung und deren Auslassöffnungen 13a bis 13g anzukoppeln. Alternativ kann auch eine motorisch betriebene Antriebseinheit vorgesehen sein, welche bei Betätigung - etwa über einen Bedienhebel 5 wie in den Figuren gezeigt - den Auslasskopf gegen die Dichtfläche 14 der Auslasseinrichtung 2 anpresst. Selbstverständlich kann die in den Figuren gezeigte Betätigungsrichtung umgekehrt sein, also die der Auslasskopf in der senkrechten Stellung verriegelt und in der nach vorne verschwenkten Stellung verriegelt ist.

Im Ausführungsbeispiel sind lediglich zwei der Auslassöffnungen 13a bis 13g, nämlich die Auslassöffnungen 13a und 13b, über die zugehörigen Öffnungen 11a, 11b in der Dichtfläche 10 des Auslasskopfes mit Auslässen 12a, 12b verbunden. Die übrigen Auslassöffnungen 13c bis 13g sind von der Dichtfläche 10 des Auslasskopfes 3 fluiddicht verschlossen. Über die so verschlossenen Auslassöffnungen 13c bis 13g kann somit keine Ausgabe erfolgen, sodass die zugehörigen Getränkekomponenten bei Verwendung des Auslasskopfes 3 nicht ausgegeben werden können und nicht zur Verfügung stehen.

In Figur 4 ist der Kaffeevollautomat 1 mit drei wechselweise einsetzbaren Auslassköpfen 3, 3', 3" gezeigt. Bei dem Auslasskopf 3' ist lediglich eine Öffnung 11a in der Dichtfläche 10 vorhanden. Diese führt zu einem Doppelauslauf 12 für zwei Espressotassen. Somit kann mit dem Auslasskopf 3' ein Espresso bezogen und in zwei Tassen gleichzeitig ausgegeben werden. Andere Auswahlmöglichkeiten wie etwa Milch oder milchschaumhaltige Getränke sind hingegen an der Benutzerschnittstelle 4 gesperrt und entsprechende Piktogramme entweder überhaupt nicht dargestellt oder ausgegraut.

Bei dem Auslasskopf 3" sind beispielhaft vier Auslassöffnungen 11a, 11b, 11d und 11g vorhanden, die mit entsprechenden Auslässen 12a, 12b, 12d und 12g korrespondieren. Entsprechend können mit diesem Auslasskopf insgesamt vier unterschiedliche Getränkekomponenten ausgegeben und gemischt werden. Beispielsweise können Kaffeegetränke mit Milchschaum sowie zusätzlichen flüssigen Aromazusätzen ausgegeben werden.

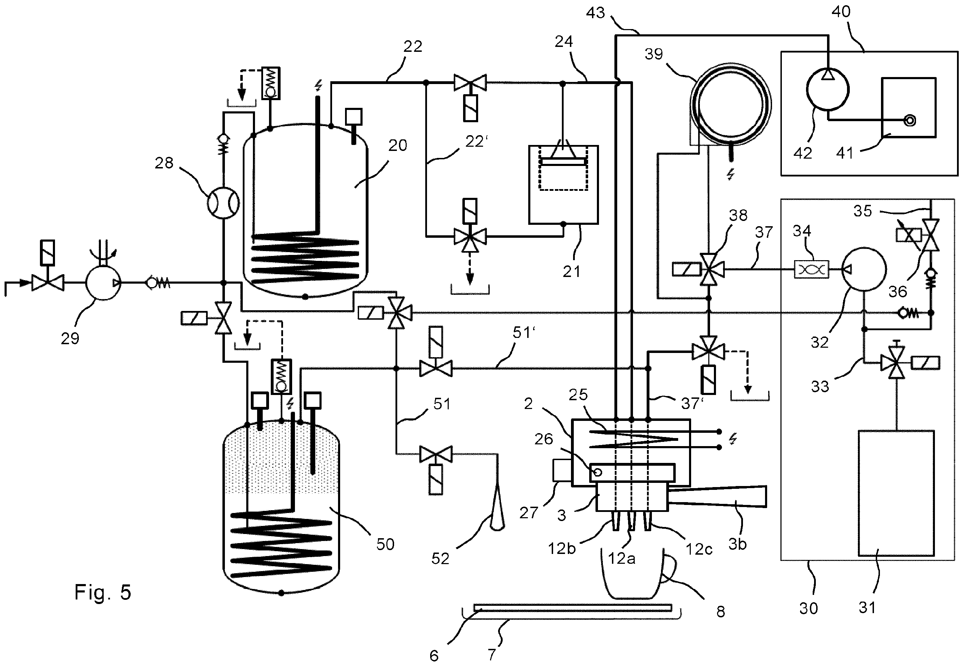

In Figur 5 ist schematisch in Form eines Wasserlaufschemas eine hydraulische Schaltung gezeigt, die in dem Kaffeevollautomat verbaut sein kann. Die Schaltung besitzt einen Heißwasserbereiter 20, der über eine Leitung 22, 22' mit einer Brühvorrichtung 21 verbunden ist. Auslassseitig ist die Brühvorrichtung 21 über die Auslassleitung 24 mit einer Auslasseinrichtung 2 verbunden. Bei der Brühvorrichtung handelt es sich um eine herkömmliche Brühgruppe eines Kaffeevollautomaten. Eine Brühgruppe, die im Rahmen der vorliegenden Erfindung eingesetzt werden kann, ist beispielsweise in der EP 2561778 A1 beschrieben. Die Dosierung der durch die Brühkammer geleiteten Wassermenge erfolgt über einen Durchflussmesser 28. Das Heißwasser aus dem Heißwasserbereiter 20 wird über eine zulaufseitig angeschlossene Wasserpumpe 29 gefördert.

In dem Wasserlaufschema ist außerdem ein Milchsystem gezeigt. Dieses umfasst einen Kühlschrank 30 mit einem Milchbehälter 31, einer Milchpumpe 32, die über eine Entnahmeleitung mit dem Milchbehälter 31 verbunden ist, sowie ein druckseitig an die Milchpumpe 32 angeschlossenes Gegendruckelement 34, welches hier als ein Wendelmischer ausgeführt ist. Alternativ kann als Gegendruckelement 34 auch eine einfache Blende oder ein Druckschlauch mit verringertem Minendurchmesser eingesetzt werden. In die Ansaugleitung 33 mündet außerdem eine Luftzufuhrleitung 35 mit einem Luftventil 36. Das Luftventil 36 ist hier als getaktet angesteuertes, also intermittierend öffnend und schließendes Magnetventil ausgebildet. Gegendruckelement 34 und Luftventil 36 dienen zum Aufschäumen von Milch in an sich bekannter Weise. Ein entsprechendes Milchsystem ist in der EP 3 021 037 A1 beschrieben.

Von dem Druckerhöhungselement 34 führt eine Milchleitung 37 zu einem Umschaltventil 38, mit dem die von der Milchpumpe 32 geförderte Milch bzw. Milchschaum wahlweise über einen Thermoblock 39 oder direkt zu der Auslasseinrichtung 2 geleitet werden kann. Entsprechende kann über das Milchsystem und die Auslasseinrichtung 2 entweder warme oder kalte Milch (Luftventil geschlossen) oder warmer oder kalter Milchschaum (Luftventil getaktet geöffnet und geschlossen) ausgegeben werden.

Schließlich ist in dem Wasserlaufschema noch eine weitere Vorrichtung 40 zur Ausgabe einer weiteren Getränkekomponente, beispielsweise eines sirupförmigen Aromazusatzes, gezeigt. Die Vorrichtung 40 umfasst hierbei einen Vorratsbehälter 41 für den betreffenden Aromazusatz sowie eine Dosierpumpe 42, mit der der Aromazusatz über eine Lebensmittelleitung 43 zu der Auslassvorrichtung 2 gefördert wird. Die Vorrichtung 40 ist hierbei lediglich beispielhaft gezeigt. Es können weitere gleichartige oder ähnliche Vorrichtungen für weitere Getränkekomponenten vorgesehen sein, die über separate Lebensmittelleitungen mit der Auslasseinrichtung verbunden sind. Eine entsprechende Sirupstation, die im Rahmen der vorliegenden Erfindung verwendet werden kann, ist in der EP 2 030 538 A1 beschrieben.

Der Milchkühlschrank 30 und die Sirupstation 40 werden typischerweise als separate Geräte ausgeführt, die als Beistellgerät neben der Getränkezubereitungsvorrichtung aufgestellt oder unter einer Theke installiert werden und mit der Getränkezubereitungsvorrichtung und der Auslaufeinrichtung 2 über extern zugeführte Lebensmittelleitungen verbunden sind.

Die Auslasseinrichtung 2 hat somit im gezeigten Ausführungsbeispiel drei Getränkezuleitungen, nämlich die Heißgetränkeleitung 24, die Leitung für Milch oder Milchschaum 37' sowie die Lebensmittelleitung 43 für flüssige Aromazusätze. An die Auslasseinrichtung 2 ist ein Auslasskopf 3 der zuvor beschriebenen Bauart angekoppelt. Dieser hat drei Auslässe 12a, 12b, 12c, welche mit den genannten Lebensmittelleitungen 24, 37', 43 über die Auslasseinrichtung 2 fluidleitend verbunden sind.

Die Auslasseinrichtung 2 besitzt außerdem eine Heizung 25, mit der sowohl die Auslasseinrichtung 2 als auch der daran gekoppelte Auslasskopf 3 vorgewärmt werden können. Dies dient dazu, eine Abkühlung auszugebender Heißgetränke bei der Ausgabe zu vermeiden. Die Erwärmung des Auslasskopfes 3 erfolgt hierbei über die Kontaktfläche zwischen Auslasskopf 3 und Auslasseinrichtung 2.

In Figur 5 ist außerdem schematisch gezeigt, dass an dem Auslasskopf 3 ein RFID-Tag 26 angebracht ist, der von einem an der Auslasseinrichtung angeordneten RFID-Leser 27 ausgelesen werden kann. Über den RFID-Tag 26 können der Auslasskopf und die von diesem ausgebbaren Getränkekomponenten identifiziert werden, sodass über eine entsprechende Steuerung der Getränkezubereitungsvorrichtung an deren Benutzerschnittstelle nur solche Getränke bzw. Getränkevarianten freigegeben und zur Auswahl angezeigt werden, die mit dem betreffenden Auslasskopf 3 ausgebbar sind. Durch Wechseln eines Auslasskopfes können somit andere Getränkevarianten bereitgestellt werden.

Schließlich ist in dem Wasserlaufschema noch ein zweiter Heißwasser- und Dampfbereiter 50 gezeigt. Dieser stellt Heißwasser zu Spül- und Reinigungszwecken sowie Dampf bereit. Dampf kann beispielsweise über eine Dampfleitung 51 und eine Dampflanze 52 herkömmlicher Bauart ausgegeben werden. Bei der in den Figuren 1 bis 4 gezeigten Getränkezubereitungsvorrichtung ist eine solche Dampflanze der besseren Übersichtlichkeit halber nicht gezeigt, könnte jedoch in bekannter Weise seitlich der Auslasseinrichtung 2 angeordnet werden. Außerdem kann der Dampf über eine Dampfeinleitung 51' auch zu der Auslasseinrichtung 2 geleitet werden, wo er beispielsweise zur Nacherwärmung von Milch oder Milchschaum verwendet werden kann. Die ebenfalls der Vollständigkeit halber gezeigten Spülleitungen und Spül- bzw. Drainageventile sind dem Fachmann allgemein bekannt und brauchen hier daher nicht näher beschrieben zu werden. Die Funktion der Spülleitungen und Spül- bzw. Drainageventile ist beispielsweise in der EP 2 583 596 A1 näher beschrieben.

## Patentansprüche

1. Getränkezubereitungsvorrichtung, insbesondere zur Ausgabe von Kaffeegetränken, mit einem Heißwasserbereiter (20), einer Brühvorrichtung (21), der Heißwasser aus dem Heißwasserbereiter (20) zuführbar ist, und einer über eine Heißgetränkeleitung (24) mit der Brühvorrichtung (21) verbundenen Auslasseinrichtung (2), wobei
die Getränkezubereitungsvorrichtung mindestens einen an der Auslasseinrichtung (2) festlegbaren Auslasskopf (3) zur Ausgabe einer oder mehrerer über separate Lebensmittelleitungen (24, 37',43) zu der Auslasseinrichtung (2) geführter Getränkekomponenten umfasst und die Auslasseinrichtung (2) eine mechanische Schnittstelle (2a, 2b, 5) zur dichtenden Ankopplung des Auslasskopfes (3, 3', 3") aufweist,
**dadurch gekennzeichnet, dass**
die mechanische Schnittstelle eine Mehrzahl von Anschlussstellen (13a-13g) für unterschiedliche Getränkekomponenten aufweist, gegen welche der Auslasskopf (3, 3', 3") dichtend angekoppelt wird, und der Auslasskopf (3, 3', 3") eine Dichtfläche (10) mit korrespondierenden Öffnungen (11a, 11b, 11d, 11g) für eine Teilmenge der Anschlussstellen (13a-13g) aufweist und die Dichtfläche (10) in angekoppeltem Zustand des Auslasskopfes (3, 3', 3") die übrigen Anschlussöffnungen (11c, 11e, 11f) fluiddicht verschließt.

2. Getränkezubereitungsvorrichtung nach Anspruch 1, bei der die mechanische Schnittstelle eine Linearführung (2a) zum Einschub des Auslasskopfes (3, 3', 3") aufweist.

3. Getränkezubereitungsvorrichtung nach einem der vorangehenden Ansprüche, bei der die mechanische Schnittstelle einen Bedienhebel (5) aufweist, welcher ausgebildet ist, den Auslasskopf (3, 3', 3") über eine Anpressmechanik gegen eine mit Anschlussstellen (13a-13g) versehene Dichtfläche (14) der Auslasseinrichtung (2) anzupressen.

4. Getränkezubereitungsvorrichtung nach Anspruch 1 oder 2, bei der die mechanische Schnittstelle einen über ein Bedienelement (5) betätigten Motor aufweist, welcher ausgebildet ist, den Auslasskopf (3, 3', 3") bei Betätigung gegen eine mit Anschlussstellen (13a-13g) versehene Dichtfläche (14) der Auslasseinrichtung (2) anzupressen.

5. Getränkezubereitungsvorrichtung nach Anspruch 1, bei der die mechanische Schnittstelle eine Drehbefestigung, insbesondere einen Bajonettverschluss, zur Ankopplung des Auslasskopfes (3, 3', 3") aufweist.

6. Getränkezubereitungsvorrichtung nach einem der vorangehenden Ansprüche, bei der die einzelnen Anschlussstellen (13a-13g) jeweils mit einer Dichtung versehen sind.

7. Getränkezubereitungsvorrichtung nach einem der vorangehenden Ansprüche, bei der die Auslasseinrichtung (2) eine Heizung (25) zur Aufwärmung der Auslasseinrichtung (2) und des daran angekoppelten Auslasskopfes (3, 3', 3") aufweist.

8. Getränkezubereitungsvorrichtung nach einem der vorangehenden Ansprüche, bei der der Auslasskopf (3, 3', 3") mit einem berührungslos auslesbaren Identifizierungsmerkmal (26), insbesondere einem RFID-Tag, versehen ist, welches über den Auslasskopf (3, 3', 3") ausgebbare Getränkearten identifiziert, und die Auslasseinrichtung (2) einen Leser (27) zum Auslesen des Identifizierungsmerkmals (26) aufweist.

9. Getränkezubereitungsvorrichtung nach Anspruch 8, mit einer Steuerung und einer mit dieser signaltechnisch verbundenen Benutzerschnittstelle (4), insbesondere grafischen Benutzerschnittstelle, über welche unterschiedliche Getränke oder Getränkevarianten auswählbar sind, wobei die Steuerung ausgebildet ist, eine automatische Ausgabe eines ausgewählten Getränks bzw. einer ausgewählten Getränkevariante durch die Getränkezubereitungsvorrichtung zu veranlassen und wobei die Steuerung mit dem Leser (27) zusammenwirkend ist, um über die grafische Benutzerschnittstelle (4) in Abhängigkeit des vom Leser (27) ausgelesenen Identifizierungsmerkmals (26) nur solche Getränke oder Getränkevarianten zur Auswahl anzubieten, die mit dem angekoppelten Auslasskopf (3, 3', 3") ausgebbar sind.

10. Getränkezubereitungsvorrichtung nach einem der vorangehenden Ansprüche, bei der der Auslasskopf (3. 3', 3") in der Form eines Siebträgers ausgebildet ist, dessen Oberseite jedoch von einer mit Anschlussöffnungen (11a, 11b, 11d, 11g) versehenen, aber ansonsten geschlossenen Dichtfläche (10) gebildet wird.

11. Getränkezubereitungsvorrichtung nach einem der vorangehenden Ansprüche, welche eine Mehrzahl wechselweise an der Auslasseinrichtung (2) ankoppelbarer Auslassköpfe (3, 3', 3") für unterschiedliche Getränke oder Getränkegruppen umfasst.

## Claims

1. Beverage maker, in particular for dispensing coffee beverages, having a water heater (20), a brewing device (21) to which hot water from the water heater (20) can be supplied, and an outlet apparatus (2) connected to the brewing device (21) via a hot beverage line (24), wherein
the beverage maker comprises at least one outlet head (3) which can be secured to the outlet apparatus (2) and is configured to dispense one or more beverage components guided to the outlet apparatus (2) via separate food lines (24, 37', 43), and the outlet apparatus (2) has a mechanical interface (2a, 2b, 5) with which the outlet head (3, 3', 3") can be coupled in a sealing manner,
**characterised in that**
the mechanical interface has a plurality of connection points (13a-13g) for different beverage components, against which the outlet head (3, 3', 3") is coupled in a sealing manner, and the outlet head (3, 3', 3") has a sealing surface (10) with corresponding openings (11a, 11b, 11d, 11g) for a subset of the connection points (13a-13g), and the sealing surface (10), when the outlet head (3, 3', 3") is in the coupled state, closes the remaining connection openings (11c, 11e, 11f) in a fluid-tight manner.

2. Beverage maker according to claim 1, in which the mechanical interface has a linear guide (2a) for pushing in the outlet head (3, 3', 3").

3. Beverage maker according to any one of the preceding claims, in which the mechanical interface has an operating lever (5) which is configured to press the outlet head (3, 3', 3") via a pressing mechanism against a sealing surface (14), provided with connection points (13a-13g), of the outlet apparatus (2).

4. Beverage maker according to claim 1 or 2, in which the mechanical interface has a motor which is actuated via an operating element (5) and which, upon actuation, is configured to press the outlet head (3, 3', 3") against a sealing surface (14), provided with connection points (13a-13g), of the outlet apparatus (2).

5. Beverage maker according to claim 1, in which the mechanical interface has a rotary fastening, in particular a bayonet closure, for coupling on the outlet head (3, 3', 3").

6. Beverage maker according to any one of the preceding claims, in which the individual connection points (13a-13g) are each provided with a seal.

7. Beverage maker according to any one of the preceding claims, in which the outlet apparatus (2) has a heater (25) for warming up the outlet apparatus (2) and the outlet head (3, 3', 3") coupled thereto.

8. Beverage maker according to any one of the preceding claims, in which the outlet head (3, 3', 3") is provided with an identifier (26) which is readable in a contactless manner, in particular an RFID tag, which identifies beverage types that can be dispensed via the outlet head (3, 3', 3"), and the outlet apparatus (2) has a reader (27) for reading the identifier (26).

9. Beverage maker according to claim 8, having a controller and a user interface (4), in particular a graphical user interface, which is connected to said controller in terms of signalling and via which different beverages or beverage variants are selectable, wherein the controller is configured to initiate automatic dispensing of a selected beverage or a selected beverage variant by the beverage maker, and wherein the controller cooperates with the reader (27) in order to offer for selection via the graphical user interface (4), depending on the identifier (26) read by the reader (27), only those beverages or beverage variants which can be dispensed by means of the coupled outlet head (3, 3', 3").

10. Beverage maker according to any one of the preceding claims, in which the outlet head (3, 3', 3") is in the form of a portafilter, the upper side of which, however, is formed by a sealing surface (10) which is provided with connection openings (11a, 11b, 11d, 11g), but which is otherwise closed.

11. Beverage maker according to any one of the preceding claims, which comprises a plurality of outlet heads (3, 3', 3") for different beverages or sets of beverages which can be alternately coupled to the outlet apparatus (2).

## Revendications

1. Dispositif de préparation de boisson, en particulier pour la sortie de boissons à base de café, avec un chauffe-eau (20), un dispositif d'infusion (21), auquel peut être fournie de l'eau chaude du chauffe-eau (20), et un dispositif de sortie (2) relié par le biais d'une conduite de boisson chaude (24) au dispositif d'infusion (21), dans lequel
le dispositif de préparation de boisson comporte au moins une tête de sortie (3) pouvant être fixée au dispositif de sortie (2) pour l'émission d'un ou plusieurs composants de boisson guidé par le biais de conduites alimentaires (24, 37', 43) séparées au dispositif de sortie (2) et le dispositif de sortie (2) présente une interface (2a, 2b, 5) mécanique pour le couplage étanche de la tête de sortie (3, 3', 3"),
**caractérisé en ce que**
l'interface mécanique présente une pluralité de points de raccordement (13a-13g) pour différents composants de boisson, contre lesquels la tête de sortie (3, 3', 3") est couplée de manière étanche, et la tête de sortie (3, 3', 3") présente une surface étanche (10) avec des ouvertures correspondantes (11a, 11b, 11d, 11g) pour une quantité partielle des points de raccordement (13a-13g) et la surface étanche (10) ferme de manière étanche au fluide dans l'état couplé de la tête de sortie (3, 3', 3") les ouvertures de raccordement (11c, 11 e, 11f) restantes.

2. Dispositif de préparation de boisson selon la revendication 1, pour lequel l'interface mécanique présente un guidage linéaire (2a) pour l'enfoncement de la tête de sortie (3, 3', 3").

3. Dispositif de préparation de boisson selon l'une quelconque des revendications précédentes, pour lequel l'interface mécanique présente un levier de commande (5) qui est réalisé afin de presser la tête de sortie (3, 3', 3") par le biais d'un mécanisme de pressage contre une surface étanche (14) pourvue de points de raccordement (13a-13g) du dispositif de sortie (2).

4. Dispositif de préparation de boisson selon la revendication 1 ou 2, pour lequel l'interface mécanique présente un moteur actionné par le biais d'un élément de commande (5) qui est réalisé afin de presser la tête de sortie (3, 3', 3") lors de l'actionnement contre une surface étanche (14) pourvue de points de raccordement (13a-13g) du dispositif de sortie (2).

5. Dispositif de préparation de boisson selon la revendication 1, pour lequel l'interface mécanique présente une fixation rotative, en particulier une fermeture à baïonnette, pour le couplage de la tête de sortie (3, 3', 3").

6. Dispositif de préparation de boisson selon l'une quelconque des revendications précédentes, pour lequel les points de raccordement (13a-13g) individuels sont pourvus respectivement d'un joint étanche.

7. Dispositif de préparation de boisson selon l'une quelconque des revendications précédentes, pour lequel le dispositif de sortie (2) présente un chauffage (25) pour le chauffage du dispositif de sortie (2) et de la tête de sortie (3, 3', 3") couplée à celui-ci.

8. Dispositif de préparation de boisson selon l'une quelconque des revendications précédentes, pour lequel la tête de sortie (3, 3', 3") est pourvue d'une caractéristique d'identification (26) lisible sans contact, en particulier une étiquette RFID qui identifie des types de boisson pouvant être émis par le biais de la tête de sortie (3, 3', 3"), et le dispositif de sortie (2) présente un lecteur (27) pour la lecture de la caractéristique d'identification (26).

9. Dispositif de préparation de boisson selon la revendication 8, avec une commande et une interface utilisateur (4) reliée en signal à celle-ci, en particulier interface utilisateur graphique, par le biais de laquelle différentes boissons ou variantes de boisson peuvent être sélectionnées, dans lequel la commande est réalisée afin de provoquer une sortie automatique d'une boisson sélectionnée ou d'une variante de boisson sélectionnée par le dispositif de préparation de boisson et dans lequel la commande coagit avec le lecteur (27) afin d'offrir par le biais de l'interface utilisateur (4) graphique en fonction de la caractéristique d'identification (26) lue par le lecteur (27) seulement de telles boissons ou variantes de boisson à la sélection qui peuvent être émises avec la tête de sortie (3, 3', 3") couplée.

10. Dispositif de préparation de boisson selon l'une quelconque des revendications précédentes, pour lequel la tête de sortie (3, 3', 3") est réalisée sous la forme d'un portefiltre, dont le côté supérieur est toutefois formé par une surface étanche (10) pourvue d'ouvertures de raccordement (11a, 11b, 11d, 11g) mais sinon fermée.

11. Dispositif de préparation de boisson selon l'une quelconque des revendications précédentes, qui comporte une pluralité de têtes de sortie (3, 3', 3") couplables en alternance au dispositif de sortie (2) pour différentes boissons ou groupes de boisson.
